# EUROPÄISCHE PATENTSCHRIFT

(11) **EP 0 995 047 B1**
(45) Veröffentlichungstag und Bekanntmachung des Hinweises auf die Patenterteilung: **04.09.2002**
(21) Anmeldenummer: 98925431.3
(22) Anmeldetag: 24.03.1998
(51) Int. Cl.: F16D 29/00, F16D 27/00

(54) **STELLANTRIEB FÜR EINE FAHRZEUGKUPPLUNG**
SERVO-ACTUATOR FOR A CAR CLUTCH
SERVO-MOTEUR POUR EMBRAYAGE DE VEHICULE

(30) Priorität: 05.07.1997 DE 19728827
(43) Veröffentlichungstag der Anmeldung: 26.04.2000
(73) Patentinhaber: ROBERT BOSCH GMBH, 70442 Stuttgart (DE)
(72) Erfinder: CAMPHAUSEN, Hanno, D-72461 Albstadt (DE); HESSDOERFER, Robert, D-97753 Karlstadt-Stetten (DE)
(86) Internationale Anmeldenummer: DE9800851
(87) Internationale Veröffentlichungsnummer: WO99002881

(56) Entgegenhaltungen:
- DE-A- 3 502 341
- DE-A- 3 706 849
- DE-A- 19 723 394
- GB-A- 2 141 513
- GB-A- 2 159 596
- US-A- 5 109 968

## Beschreibung

Die Erfindung betrifft einen Stellantrieb für eine Fahrzeugkupplung der im Oberbegriff des Anspruchs 1 definierten Gattung.

Bei einem bekannten Stellantrieb dieser Art (GB 2 141 513 A) ist das Getriebeglied als Schneckenrad eines Schneckengetriebes ausgebildet, dessen Schnecke auf einer rechtwinklig zur Drehachse des Schneckenrades ausgerichteten Antriebswelle eines Elektromotors drehfest sitzt. Mit dem Schneckenrad ist ein Nocken drehfest verbunden, an dem umfangsseitig ein längsbewegbares Koppelelement in Form eines sich rechtwinklig zur Schneckenradachse erstreckenden Stößels kraftschlüssig angreift. Dieser wirkt auf ein Umschaltventil eines Unterdruckverstärkers ein, mit dem ein Kolben eines hydraulischen Geberzylinders zum Aus- und Einrücken der Fahrzeugkupplung verschiebbar ist. Bei Ausfall des Unterdruckverstärkers kann der Stößel den Kolben des Zylinders ohne Kraftunterstützung selbst betätigen. Abgesehen von der relativ aufwendigen Ausgestaltung des Stellantriebs und des großen Einbauraumbedarfs können sich Funktionsprobleme bezüglich des lediglich auf Kraftschluß beruhenden Zusammenwirkens von Stößel und Nocken ergeben.

Ein anderer bekannter Stellantrieb (DE 35 02 341 A) weist zwischen einem eingangsseitigen, elektromotorisch angetriebenen Schneckengetriebe und einer ausgangsseitigen, schwenkbaren Gabel zum Ausrücken der Fahrzeugkupplung ein Hebelgetriebe mit einem Hebelpaar auf. Die beiden Hebel des Hebelpaares sind auf verschiedenen, nicht koaxialen Achsen gelagert und stehen formschlüssig miteinander in Eingriff. Dabei weist ein Hebel einen radial verlaufenden Schlitz auf, in den ein am anderen Hebel angebrachter Zapfen eingreift. Durch diese Form des Eingriffs soll die Montage des Stellantriebs erleichtert und es sollen Toleranzen ausgeglichen werden. Darüber hinaus kann das Übersetzungsverhältnis des Hebelgetriebes eingestellt werden.

### Vorteile der Erfindung

Der erfindungsgemäße Stellantrieb mit den Merkmalen des Anspruchs 1 hat den Vorteil, daß das Ausgangsglied über den zwischen den Längskanten der Ausnehmung geführten Abtastkörper zum Rückführen des Ausgangsglieds zum Zwecke des Einrückens der Kupplung mit dem Getriebeglied auch dann gekoppelt bleibt, wenn der von dem Ausgangsglied betätigte Kupplungshebel der Rückbewegung des Ausgangsglieds nur zeitlich verzögert zu folgen vermag. Damit wird jede Lose im Verstellweg des Stellantriebs vermieden und damit zusammenhängende, störende Betriebsgeräusche werden unterdrückt.

Mittels der Kurvenbahn im Getriebeglied wird eine nicht lineare Kraftkompensation beim Ausrücken der Kupplung erhalten. Die nicht lineare Kraftkompensation kann durch Ausbildung der Form der Kurvenbahn so eingestellt werden, daß sich die Charakteristik der meist als Tellerfeder ausgebildeten Kupplungseinrückfeder annähernd nachvollziehen und damit über den Verschiebeweg des Ausgangsglieds ein Optimum an Kraftausgleich erreichen läßt. Durch eine definierte Form der Kurvenbahn kann die Verstellbewegung des Ausgangsglieds beeinflußt und sowohl gleichförmig als auch ungleichförmig-ausgelegt werden.

Gemäß einer vorteilhaften Ausführungsform der Erfindung greift am Getriebeglied mit Radialabstand zu dessen Drehachse ein vorzugsweise als Zug- oder Druckfeder ausgebildeter Kraftspeicher an, der bei einem das Ausrücken der Kupplung bewirkenden Verdrehen des Getriebeglieds ein gleichsinniges Zusatzdrehmoment am Getriebeglied erzeugt. Dieses Zusatzdrehmoment ist über den Verschiebeweg des Ausgangsglieds nicht linear und kann durch die Lage des Angriffspunkts des Kraftspeichers am Getriebeglied variiert werden, so daß sich eine optimale Kompensation der Kraft der Kupplungseinrückfeder über den Verschiebeweg des Ausgangsglieds erreichen läßt.

In einer bevorzugten Ausführungsform der Erfindung ist das Getrieberad von dem Schneckenrad eines selbsthemmend ausgebildeten Schneckengetriebes gebildet, dessen Schnecke drehfest auf der Abtriebswelle eines reversierbaren Elektromotors sitzt.

### Zeichnung

Die Erfindung ist anhand von in der Zeichnung dargestellten Ausführungsbeispielen in der nachfolgenden Beschreibung näher erläutert. Es zeigen:
- Fig. 1: ausschnittweise einen Längsschnitt eines Stellantriebs für eine Fahrzeugkupplung, schematisch dargestellt,
- Fig. 2: einen Schnitt längs der Linie II-II in Fig. 1,
- Fig. 3: eine gleiche Darstellung wie in Fig. 1 eines Stellantriebs gemäß einem zweiten Ausführungsbeispiel,
- Fig. 4: eine schematische Darstellung einer von den Stellantrieben gemäß Fig. 1 - 3 betätigten Fahrzeugkupplung.

### Beschreibung der Ausführungsbeispiele

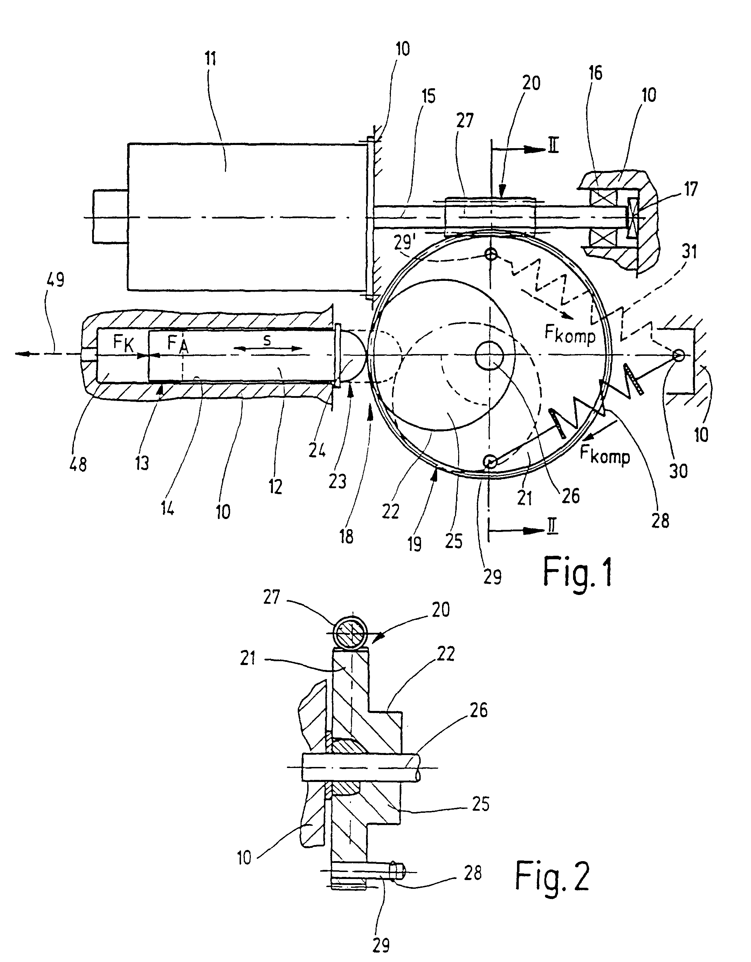

Der in Fig. 1 schematisch im Längsschnitt dargestellte Stellantrieb weist ein Gehäuse 10 auf, an dem ein reversierbarer Elektromotor 11 angeflanscht ist und in dem ein als Stößel 12 ausgebildetes Ausgangsglied 13 längsverschieblich geführt ist, das zwecks Ausrücken einer in Fig. 4 schematisch dargestellten Fahrzeugkupplung mittel- oder unmittelbar auf einen mit 47 bezeichneten Kupplungshebel der Fahrzeugkupplung zum Ausrücken der Fahrzeugkupplung gegen die Kraft einer die Kupplung in Einrückstellung haltenden Kupplungseinrückfeder 43 wirkt. Dabei kann der in einer Bohrung 14 im Gehäuse 10 axial verschieblich geführte Stößel 12 direkt den Kupplungshebel 47 betätigen. Zwischen Stößel 12 und Kupplungshebel 47 kann aber auch ein mechanisches oder hydraulisches Übertragungsglied angeordnet sein. Die die Kupplung in Einrückstellung haltende Kupplungseinrückfeder wirkt mit der Federkraft F_{K} auf den Stößel 12. Zum Ausrücken der Kupplung muß der Stößel 12 eine der Federkraft F_{K} entgegengerichtete Antriebskraft F_{A} aufbringen, und zwar über seinen in Fig. 1 mit s bezeichneten Verschiebeweg.

In dem Ausführungsbeispiel der Fahrzeugkupplung gemäß Fig. 4 ist eine bekannte und z.B. in der DE 43 20 204 A1 beschriebene Reibungskupplung 40 dargestellt. Diese weist eine mit einer Getriebeeingangswelle 41 drehfest verbundene Kupplungsscheibe 42, die von der hier als Membranfeder ausgebildeten Kupplungseinrückfeder 43 reibschlüssig zwischen einer Anpreßplatte 44 und einer mit einer Kurbelwelle 45 der Brennkraftmaschine des Fahrzeugs verbundenen Gegenanpreßplatte 46 in Form eines Schwungrads einspannbar ist. Die Reibungskupplung 40 ist mittels des vom Stellantrieb, und zwar von dessen Ausgangsglied 13, betätigten Ausrückers oder Kupplungshebels 47 gegen die Kraft der Kupplungseinrückfeder 43 auskuppelbar. Zwischen Ausgangsglied 13 und Kupplungshebel 47 ist ein hydraulisches Übertragungsglied angeordnet, das einen Geberzylinder 48 (Fig. 1), eine Hydraulikleitung 49 (Fig. 1 und 4) und einen auf den Kupplungshebel 47 wirkenden Nehmerzylinder 50 umfaßt. Das Ausgangsglied 13 bildet den im Geberzylinder 48 geführten Stellkolben. Verschiebt sich das Ausgangsglied 13 in Fig. 1 nach links, so wird im hydraulischen Übertragungsglied ein Hydraulikdruck aufgebaut, als dessen Folge der Kupplungshebel 47 verschwenkt und die Reibungskupplung 40 gegen die Kraft der Kupplungseinrückfeder 43 ausgekuppelt wird. Fig. 4 zeigt die Reibungskupplung 40 in Auskuppelstellung, Fig. 1 die Stellung des Ausgangsglieds 13 bei eingerückter Reibungskupplung 40.

Im Gehäuse 10 des Stellantriebs ist die Abtriebswelle 15 des Elektromotors 11 mittels eines Radiallagers 16 drehend gelagert und in Achsrichtung über ein Axiallager 17 abgestützt. Zwischen der Abtriebswelle 15 des Elektromotors 11 und dem Ausgangsglied 13 bzw. Stößel 12 des Stellantriebs ist ein Getriebe 18 angeordnet, welches die rotatorische Bewegung der Abtriebswelle 15 des Elektromotors 11 in eine translatorische Bewegung des Ausgangsglieds 13 bzw. des Stößels 12 umsetzt. Dieses Getriebe 18 umfaßt ein im Gehäuse 10 drehend gelagertes Getriebeglied 19, das hier als Schneckenrad 21 eines Schneckengetriebes 20 ausgebildet ist, eine am Getriebeglied 19 ausgebildete Kurvenbahn 22 und einen am Ende des Stößels 12 angeordneten Abtastkörper 23, der bei Drehung des Getriebeglieds 19 die Kurvenbahn 22 abtastet und eine entsprechende Verschiebebewegung des Stößels 12 erzeugt. Im Ausführungsbeispiel der Fig. 1 ist der Abtastkörper 23 als eine an dem dem Schneckenrad 21 zugekehrten Ende des Stößels 12 ausgebildete Kalotte 24 ausgeführt, die unter der Federraft F_{K} der Kupplungsfeder an der Kurvenbahn 22 anliegt. Die Kurvenbahn 22 ist im Ausführungsbeispiel der Fig. 1 am Umfang eines am Schneckenrad 21 einstückig angeformten Nockens 25 ausgebildet. Der Nocken 25 ist dabei zylinderförmig ausgeführt und exzentrisch zur Drehachse 26 des Schneckenrads 21 von diesem axial abstehend angeordnet. Das Schneckengetriebe 20, dessen Schnecke 27 drehfest auf der Abtriebswelle 15 des Elektromotors 11 sitzt, ist selbsthemmend ausgeführt.

Zum Ausrücken der Kupplung wird der Elektromotor 11 eingeschaltet, wobei dessen Abtriebswelle 15 in eine solche Richtung dreht, daß das Schneckenrad 21 in Fig. 1 im Uhrzeigersinn verdreht wird. Dadurch wird über die Kurvenbahn 22 des Nockens 25 der Stößel 12 in Fig. 1 nach link bewegt und verstellt mit der Antriebskraft F_{A} den Kupplungshebel gegen die Federkraft F_{K} der Kupplungseinrückfeder. Die Kupplung wird gelöst. Zum Wiedereinrücken der Kupplung wird der Elektromotor 11 in umgekehrter Drehrichtung eingeschaltet. Über das Schneckengetriebe 20 wird das Schneckenrad 21 in Fig. 1 entgegen Uhrzeigersinn geschwenkt und der Nocken 25 bewegt sich in seine in Fig. 1 strichliniert dargestellte Endposition. Die auf den Stößel 12 wirkende Federkraft F_{K} der Federeinrückkupplung hält die Kalotte 24 in Anlage an der Kurvenbahn 22 des Nockens 25, so daß diese unter Zurückbewegung des Stößels 12 auf der Kurvenbahn 22 entlanggleitet, bis sie ihre in Fig. 1 strichliniert dargestellte Endstellung erreicht hat. Die Kupplung ist damit wieder eingerückt.

Zur Kompensation der Federkraft F_{K} der Kupplungsfeder greift am Schneckenrad 21 mit Radialabstand von dessen Drehachse 26 ein Kraftspeicher in Form einer Druckfeder 28 an, deren anderes Federende im Gehäuse 10 abgestützt ist. Der Angriffspunkt der Druckfeder 28 am Schneckenrad 21 ist mit 29 und das im Gehäuse 10 ausgebildete Widerlager der Druckfeder 28 mit 30 bezeichnet. Diese Druckfeder 28, die in der in Fig. 1 strichliniert dargestellten Grundstellung des Nockens 25 vorgespannt ist, erzeugt beim Drehen des Schneckenrads 21 in Fig. 1 im Uhrzeigersinn zwecks Ausrücken der Kupplung ein gleichsinnig wirkendes Zusatzdrehmoment am Schneckenrad 21. Dieses Zusatzdrehmoment kann durch die Lage des Angriffspunktes 29 am Schneckenrad 21 so eingestellt werden, daß die auf den Stößel 12 wirkende, über den Kupplungsausrückweg nichtlineare Federkraft F_{K} der Kupplungseinrückfeder über den Verschiebeweg s des Stößels 12 nahezu vollständig kompensiert wird, so daß der Elektromotor 11 nur noch eine kleine Verstellkraft aufbringen muß. Die Kompensationskraft der Druckfeder 28 ist in Fig. 1 durch den Pfeil F_{Komp} angedeutet. Anstelle der Druckfeder 28 kann auch eine in Fig. 1 strichliniert angedeutete Zugfeder 31 verwendet werden, deren Angriffspunkt 29' am Schneckenrad 21 diametral zum Angriffspunkt 29 der Druckfeder 28 angeordnet werden muß, um ein gleichsinnig wirkendes Zusatzdrehmoment am Schneckenrad 21 zu erzeugen.

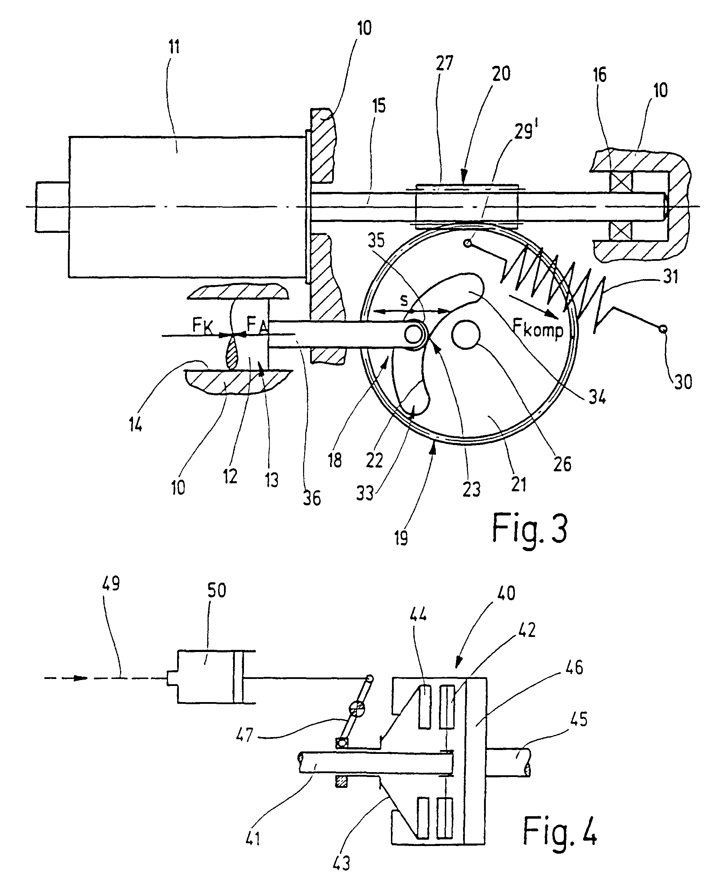

Der in Fig. 3 schematisch dargestellte Stellantrieb gemäß einem weiteren Ausführungsbeispiel unterscheidet sich von dem zuvor beschriebenen Stellantrieb dadurch, daß die Kurvenbahn 22 für den Abtastkörper 23 nicht vom Umfang eines Nockens, sondern von der einen Längskante einer im Schneckenrad 21 eingebrachten, langgestreckten Ausnehmung 33 gebildet ist, in die der Abtastkörper 23 mit geringem Querspiel zwischen den Längskanten hineinragt. Im Ausführungsbeispiel der Fig. 3 ist die Ausnehmung 33 als eine bogenförmige Nut 34 ausgebildet, deren Krümmungsmittelpunkt exzentrisch zur Drehachse 26 des Schneckenrads 21 liegt. Der Abtastkörper 23 ist eine an den Längsrändern der Nut 34 geführte Rolle 35, die drehbar auf einer mit dem Stößel 12 verbundene Koppelstange 36 sitzt. An dem Schneckenrad 21 greift wiederum ein Kraftspeicher in Form der Zugfeder 31 an, die im Angriffspunkt 29' im Radialabstand zur Drehachse 26 am Schneckenrad 21 angelenkt und im Widerlager 30 im Gehäuse 10 festgelegt ist. Die von der Zugfeder 31 über den Verschiebeweg s des Stößels 12 erzeugte Kompensationskraft F_{Komp} ist in Fig. 3 durch einen Pfeil symbolisiert.

Wird das Schneckenrad 21 über das Schneckengetriebe 20 von dem eingeschalteten Elektromotor 11 in Fig. 3 im Uhrzeigersinn gedreht, so verschiebt die an der Kurvenbahn 22 in der Nut 34 sich abrollende Rolle 35 die Koppelstange 36 und damit den Stößel 12 mit der Antriebskraft F_{A} in Fig. 3 nach links entgegen der Federkraft F_{K} der Kupplungseinrückfeder. Diese Antriebskraft F_{A} wird zum überwiegenden Teil von der in Ausgangslage vorgespannten Zugfeder 31 aufgebracht und zum kleineren Teil von der Antriebsleistung des Elektromotors 11. Diese Antriebskraft F_{A} ist über den verschiebeweg s des Stößels 12 nichtlinear und kann durch entsprechende Ausgestaltung der Ausnehmung 33 und deren Kurvenbahn 22 optimal an die ebenfalls nichtlineare Charakteristik der Kupplungseinrückfeder angepaßt werden. Bei Wiedereinrücken der Kupplung und bei dazu umgekehrt drehendem Schneckenrad 21 wird die Rolle 35 von der der Kurvenbahn 22 gegenüberliegenden Längskante der Ausnehmung 33 mitgenommen und über die Koppelstange 36 der Stößel 12 in Fig. 3 nach rechts bewegt, auch dann wenn das Nachführen des Kupplungshebels durch die Kupplungseinrückfeder verzögert erfolgt und der Stößel 12 vorübergehend nicht von der Kupplungseinrückfeder beaufschlagt wird.

## Patentansprüche

1. Stellantrieb für eine Fahrzeugkupplung mit einem längsverschieblich geführten Ausgangsglied (13) zum mitteloder unmittelbaren Ausrücken der Fahrzeugkupplung und mit einem eine rotatorische Eingangsbewegung in eine translatorische Bewegung des Ausgangsglieds (13) umsetzenden Getriebe (18), das ein von der Eingangsbewegung beaufschlagtes, um eine quer zur Verschieberichtung (s) des Ausgangsglieds (13) ausgerichtete Drehachse (26) schwenkbares Getriebeglied (19) und ein in Verschieberichtung (s) des Ausgangsglieds (13) längsbewegbares Koppelelement (36) aufweist, das einerseits am Ausgangsglied (13) und andererseits mit einem Abtastkörper (23) an einer Kurvenbahn (22) des Getriebeglieds (19) angreift, welche sich in der Drehrichtung des Getriebeglieds (19) erstreckt, **dadurch gekennzeichnet,**
**daß** die Kurvenbahn (22) von der einen Längskante einer im Getriebeglied (19) eingebrachten, langgestreckten Ausnehmung (33) gebildet ist, in die der Abtastkörper (23) mit geringem Querspiel zwischen den Längskanten hineinragt.

2. Stellantrieb nach Anspruch 1 **dadurch gekennzeichnet, daß** der Abtastkörper (23) als eine mit dem Ausgangsglied (13) verbundene Rolle (35) ausgebildet ist, die an den Längskanten der Ausnehmung (33) geführt ist.

3. Stellantrieb nach Anspruch 2, **dadurch gekennzeichnet, daß** die Rolle (35) von einer als Koppelelement vorgesehenen Koppelstange (36) quer absteht, die mit dem längsverschieblich geführten Ausgangsglied (13) fest verbunden ist.

4. Stellantrieb nach Anspruch 1 oder 2, **dadurch gekennzeichnet, daß** die Ausnehmung (33) als eine bogenförmige Nut (34) ausgebildet ist, deren Krümmungsmittelpunkt exzentrisch zur Drehachse (26) des Getriebeglieds (19) liegt.

5. Stellantrieb nach Anspruch 1, **dadurch gekennzeichnet, daß** am Getriebeglied (19) mit Radialabstand zu dessen Drehachse (26) ein Kraftspeicher (28, 31) angreift, der bei einem das Ausrücken der Kupplung bewirkenden Verdrehen des Getriebeglieds (19) ein gleichsinniges Zusatzdrehmoment am Getriebeglied (19) erzeugt.

6. Stellantrieb nach Anspruch 5, **dadurch gekennzeichnet, daß** der Kraftspeicher als Druck- oder Zugfeder (28, 31) ausgebildet ist.

7. Stellantrieb nach einem der Ansprüche 1 oder 5, **dadurch gekennzeichnet, daß** das Getriebeglied (19) vom Schneckenrad (21) eines Schneckengetriebes (20) gebildet ist, dessen Schnecke (27) drehfest auf der Abtriebswelle (15) eines Elektromotors (11) sitzt.

8. Stellantrieb nach Anspruch 7, **dadurch gekennzeichnet, daß** der Elektromotor (11) und das Schneckengetriebe (12) in einem Gehäuse (10) aufgenommen sind, daß das Ausgangsglied (13) ein in einer Gehäusebohrung (14) geführter Stößel (12) ist und daß das Widerlager (30) von Druck- oder Zugfeder (28, 31) im Gehäuse (10) ausgebildet ist.

## Claims

1. Actuating drive for a vehicle clutch, with a longitudinally displaceably guided output member (13) for the indirect or direct disengagement of the vehicle clutch, and with a gear unit (18) which converts a rotational input movement into a translational movement of the output member (13) and which has a gear unit member (19), acted upon by the input movement and pivotable about an axis of rotation (26) oriented transversely to the direction of displacement (s) of the output member (13), and a coupling element (36) which is longitudinally moveable in the direction of displacement (s) of the output member (13) and which engages, on the one hand, on the output member (13) and, on the other hand, with a sensing body (23) on a cam track (22) of the gear unit member (19), said cam track extending in the direction of rotation of the gear unit member (19), **characterized in that** the cam track (22) is formed by one longitudinal edge of an elongate recess (33) which is introduced in the gear unit member (19) and into which the sensing body (23) projects with slight transverse play between the longitudinal edges.

2. Actuating drive according to Claim 1, **characterized in that** the sensing body (23) is designed as a roller (35) which is connected to the output member (13) and which is guided on the longitudinal edges of the recess (33).

3. Actuating drive according to Claim 2, **characterized in that** the roller (35) projects transversely from a coupling rod (36) which is provided as a coupling element and which is connected firmly to the longitudinally displaceably guided output member (13).

4. Actuating drive according to Claim 1 or 2, **characterized in that** the recess (33) is designed as an arcuate slot (34), the centre of curvature of which lies eccentrically to the axis of rotation (26) of the gear unit member (19).

5. Actuating drive according to Claim 1, **characterized in that** a force accumulator (28, 31) engages on the gear unit member (19) at a radial distance from the axis of rotation (26) of the latter and, when the gear unit member (19) rotates so as to cause the disengagement of the clutch, generates a codirectional additional torque on the gear unit member (19).

6. Actuating drive according to Claim 5, **characterized in that** the force accumulator is designed as a compression or tension spring (28, 31).

7. Actuating drive according to one of Claims 1 and 5, **characterized in that** the gear unit member (19) is formed by the worm wheel (21) of a worm gear unit (20), the worm (27) of which is seated fixedly in terms of rotation on the driven shaft (15) of an electric motor (11).

8. Actuating drive according to Claim 7, **characterized in that** the electric motor (11) and the worm gear unit (12) are received in a housing (10), **in that** the output member (13) is a tappet (12) guided in a housing bore (14), and **in that** the abutment (30) of the compression or tension spring (28, 31) is formed in the housing (10).

## Revendications

1. Servo-moteur pour embrayage de véhicule automobile, comprenant un organe de sortie (13) coulissant longitudinalement pour débrayer directement ou indirectement l'embrayage du véhicule, et une transmission (18) transformant le mouvement rotatif d'entrée en un mouvement de translation de l'organe de sortie (13), présentant un organe de transmission (19) actionné par le mouvement d'entrée et pivotant autour d'un axe de rotation (26) orienté transversalement par rapport à la direction de coulissement (s) de l'organe de sortie (13), ainsi qu'un élément d'accouplement (36) mobile dans la direction de coulissement (5) de l'organe de sortie (13), en prise d'un côté avec l'organe de sortie (13) et de l'autre, par un palpeur (23), avec une piste de came (22) de l'organe de transmission (19), cette piste s'étendant dans le sens de rotation de l'organe de transmission (19),
**caractérisé en ce que**
la piste de came (22) est constituée par un des bords longitudinaux d'un évidement (33) allongé creusé dans l'organe de transmission (19) et dans lequel le palpeur (23) pénètre en laissant un faible jeu transversal entre les bords longitudinaux.

2. Servo-moteur selon la revendication 1,
**caractérisé en ce que**
le palpeur (23) est constitué par un galet (35) relié à l'organe de sortie (13) et qui est guidé le long des bords allongés de l'évidement (33).

3. Servo-moteur selon la revendication 2,
**caractérisé en ce que**
le galet (35) fait saillie transversalement sur une tige d'accouplement (36) prévue comme élément d'accouplement et qui est solidaire de l'organe de sortie (13) coulissant longitudinalement.

4. Servo-moteur selon l'une quelconque des revendications 1 ou 2,
**caractérisé en ce que**
l'évidement (33) est une rainure (34) en forme d'arc circulaire dont le centre est excentré par rapport à l'axe de rotation (26) de l'organe de transmission (19).

5. Servo-moteur selon la revendication 1,
**caractérisé en ce qu'**
avec l'organe de transmission (19) est en prise, à une certaine distance radiale de l'axe de rotation (26) de cet organe, un accumulateur de force (28, 31) qui applique à l'organe de transmission (19), quand celui-ci tourne en provoquant le débrayage, un couple additionnel agissant dans le même sens.

6. Servo-moteur selon la revendication 5,
**caractérisé en ce que**
l'accumulateur de force est constitué par un ressort de poussée ou de traction (28, 31).

7. Servo-moteur selon l'une quelconque des revendications 1 à 5,
**caractérisé en ce que**
l'organe de transmission (19) est constitué par une roue tangente (21) d'une transmission à vis tangente (20) dont la vis (27) est montée solidairement sur l'arbre de sortie (15) d'un moteur électrique (11).

8. Servo-moteur selon la revendication 7,
**caractérisé en ce que**
le moteur électrique (11) et la transmission à vis tangente (12) sont logés dans un boîtier (10), l'organe de transmission (13) étant constitué par un poussoir (12) guidé dans un alésage (14) du boîtier avec comme contre appui (30) dans le boîtier (10), le ressort de poussée ou de traction (28, 31).
